# EUROPEAN PATENT SPECIFICATION

(11) **EP 0 485 132 B1**
(45) Date of publication and mention of the grant of the patent: **06.03.1996**
(21) Application number: 91310150.7
(22) Date of filing: 04.11.1991
(51) Int. Cl.: G01C 21/20

(54) **Direction sensor having an earth magnetism sensor and a rate gyro sensor and navigation system having this direction sensor**
Richtungssensor mit einem Erdmagnetismussensor und einem Drehgeschwindigkeitskreiselsensor und Navigationssystem, welches diesen Richtungssensor enthält
Capteur de direction avec un capteur du magnétisme terrestre et un capteur gyroscopique du vitesse de rotation et système de navigation qui contient ce capteur de direction

(30) Priority: 06.11.1990 JP 298993/90; 06.11.1990 JP 298994/90
(43) Date of publication of application: 13.05.1992
(73) Proprietor: FUJITSU TEN LIMITED, Kobe-shi, Hyogo (JP)
(72) Inventor: Ichimura, Atsushi, Kobe-shi, Hyogo (JP); Nakatani, Yasuhiro, Kobe-shi, Hyogo (JP)
(74) Representative: Skone James, Robert Edmund

(56) References cited:
- EP-A- 0 451 988
- GB-A- 2 216 272
- US-A- 4 517 565
- PATENT ABSTRACTS OF JAPAN, vol. 12, no. 214 (P-718)[3061], 18th June 1988; & JP-A-63 11 810
- PATENT ABSTRACTS OF JAPAN, vol. 9, no. 90 (P-350)[1813], 19th April 1985; & JP-A-59 218 913
- PATENT ABSTRACTS OF JAPAN, vol. 13, no. 125 (P-847)[3473], 28th March 1989; & JP-A-63 295 913
- PATENT ABSTRACTS OF JAPAN, vol. 12, no. 413 (P-780)[3260], 2nd November 1988; & JP-A-63 150 616

## Description

The present invention relates to a direction sensor having an earth magnetism sensor and a rate gyro sensor, and a navigation system of a vehicle having this direction sensor for locating a position on a map. More particularly, this invention relates to an improvement of detection accuracy of a driving direction sensor and navigation system.

Vehicles are recently equipped with a navigation system that detects driving paths and displays position on a map and offers instructions to aid a driver. The navigation system includes a driving direction sensor and a driving distance sensor, and calculates a position on a map from the driving direction and the driving distance. The direction sensor used in the above system is required to detect the absolute direction corresponding to the direction on a map.

Two types of direction sensors are generally used in the navigation system. One type is a rate gyro sensor that detects a rotation speed and calculates a rotated angle from a reference direction. A conventional gyro having a gimbal, an optical fiber gyro and a gas rate sensor are included in this rate gyro sensor. The rate gyro sensor generally has characteristics such that the detection accuracy is very high in a short time range, but it deteriorates in a long time range due to the accumulation of errors. Therefore, the rate gyro sensor needs to be periodically calibrated. This calibration is performed by the absolute direction. Further, the rate gyro sensor needs to be initialized to set the reference direction at the start of the operation because it calculates the rotated angle from the reference direction. This initialization is also performed by the absolute direction and the calibration is substantially equal to the initialization.

The other type is an earth magnetism sensor that detects a forward angle of a vehicle relative to magnetic north of earth and calculates an absolute direction on a map. The earth magnetism sensor has an advantage in that it can detect an absolute direction and detecting errors do not accumulate. However, because the intensity of earth magnetism is as low as 0.3 Gauss, the detection of earth magnetism is disturbed by various external magnetic factors such as polarization of a vehicle body, and a magnetic field due to electrical equipment of a vehicle. Further, various facilities such iron bridges, large buildings, high level roads and tunnels also disturb the earth magnetism. These disturbances cause errors in the detection of the earth magnetism sensor. Various methods are proposed for compensating for the disturbance due to a polarization of a vehicle body, and it can be reduced by using such a method. However, the disturbances due to facilities cannot be compensated because these disturbances exist at random.

As the rate gyro sensor and the earth magnetism sensor respectively have the above-mentioned characteristics, a conventional navigation system generally comprises both a rate gyro sensor and an earth magnetic sensor and calculates a precise driving direction by compensating each other's results. For example, in a navigation system disclosed in Japanese Unexamined Utility Model Publication (Kokai) No. 62-163721, the errors of an earth magnetism sensor due to the polarization of a vehicle is compensated for by the difference of the outputs of the earth magnetism sensor and the rate gyro sensor.

In the most orthodox system, the rate gyro sensor is normally used as a driving direction sensor, and the output of the earth magnetism sensor is used only as a reference direction of the initialization and the periodical calibrations of the rate gyro sensor. This system has problems in that the reference direction obtained from the earth magnetism sensor is not necessarily precise and the accumulation of errors of the rate gyro sensor is not reduced.

In a navigation system disclosed in Japanese Unexamined Utility Model Publication (Kokai) No. 62-163721, the errors of an earth magnetism sensor due to the polarization of a vehicle is compensated for by the difference of the outputs of the earth magnetism sensor and the rate gyro sensor.

In a navigation system disclosed in Japanese Unexamined Utility Model Publication (Kokai) No. 61-72618, the earth magnetism sensor is normally used as a driving direction sensor and the rate gyro sensor is used when the magnetic field of the location position seems to be disturbed more than a predetermined level. The intensity of the disturbance is determined according to the difference between the outputs of the earth magnetism sensor and the rate gyro sensor in a short time range. However, if the magnetic field of earth magnetism is uniformly disturbed in a wide range, for example, when driving along a railroad or a transmission line, the incorrect output of the earth magnetism sensor is always used because the difference in the short time range is always small under this condition.

In another navigation system disclosed in Japanese Unexamined Patent Publication (Kokai) No. 64-353314, information relating to specific facilities that largely influence the earth magnetic field and those influence patterns is disclosed. The earth magnetism sensor detects these changes of the magnetic field due to the specific facilities. The navigation system determines positions of the specific facilities and compensates the locating position according to the positions of the specific facilities. This system normally uses the rate gyro sensor as the driving direction sensor and initializes the rate gyro sensor by the above detected positions. However, the influence pattern of the facility to the magnetic field is very complex. Therefore, it is not easy to determine the facility position according to the detected changes of the magnetic field. Further, when there is no specific facility in a wide range, the driving direction is determined only by the rate gyro sensor. Therefore, this system also has a disadvantage in that the error accumulation of the rate gyro sensor increases.

GB-A-2216272 describes a driving azimuth detecting apparatus which provides both a geomagnetic azimuth sensor and a gyroscopic azimuth sensor, and subtracts variation in signals from the geomagnetic sensor from variation in signals from the gyroscopic sensor to determine the geomagnetic conditions. The driving azimuth is then processed based upon the determined conditions.

EP-A-0451988 discloses an azimuth detecting apparatus which provides both an earth magnetism sensor and a gyroscopic sensor, and determines the weighted mean ratio according to the error evaluation results of both sensors.

JP-A-63-150616 describes a run path display device in which an earth magnetism sensor is used until the completion of the start-up of a gas rate sensor. The gas rate gas sensor provides a temperature control function which maintains the internal temperature of the gas rate sensor at a constant value by heating.

US-A-4517565 describes apparatus for indicating location of a vehicle based on output from a distance detecting unit and a bearing detector unit.

JP-A-59-218913 describes detecting the direction of movement of a moving body continuously by forming an angular space sensor and an earth magnetism sensor and synthesizing the outputs with a proper ratio in accordance with the conditions.

JP-A-63-11810 describes a method of processing output data for an earth magnetism sensor in which information regarding sites having earth magnetism disturbances has been stored previously, so that when a site subject to earth magnetism disturbance is detected ahead of a current location, the output from the earth magnetism sensor is replaced by specified data, e.g. output of a rate sensor.

According to one aspect of the present invention, a driving direction sensor of a vehicle for outputting a compensated direction, comprises,
an earth magnetism sensor for detecting a forward angle relative to magnetic north of earth and outputting a first driving direction calculated from said detected forward angle,
a rate gyro sensor for calculating a rotated angle from detected rotating speed and for outputting a second driving direction obtained by adding said rotated angle to a reference direction, and
a direction compensating means for calculating a compensated direction from said first driving direction and said second driving direction,
wherein said direction compensating means calculates said compensated direction by a weighted mean process of said first driving direction and said second driving direction, and sets said compensated direction as said reference direction of said rate gyro sensor, characterised in that the weighting factors of said weighted mean process are made to change according to a driving time of said vehicle such that the weighting factor of the rate gyro sensor is initially set to a first predetermined value near 1, the weighting factor continuously decreases from the first predetermined value to a second predetermined value in proportion to time after a first predetermined period of time, and the weighting factor is held at the second predetermined value after a second predetermined period of time.

The present invention improves the detection accuracy of the driving direction of a navigation system having an earth magnetism sensor and a rate gyro sensor and calculating the compensated driving direction from both outputs, especially, to propose a better compensation method of outputs of an earth magnetism sensor and a rate gyro sensor.

As described in the above, the rate gyro sensor has a very high accuracy in a short time range. On the other hand, the detection accuracy of the earth magnetism sensor is disturbed by external factors due to facilities and topographical conditions. However, the average value of outputs of the earth magnetism sensor in a long time range is disposed to converge to a correct value. Therefore, the compensated driving direction obtained by the weighted mean process with a heavy ratio to the rate gyro sensor has an accuracy similar to the rate gyro sensor in a short time range. And, by repeating the setting process of the obtained compensated driving direction to the reference direction of the rate gyro sensor and above sampling process by turns, the detection errors of the earth magnetism sensor are averaged and the rate gyro sensor is calibrated by the precise direction. Consequently, the direction sensor has a high level accuracy corresponding to the rate gyro sensor in a short time range and it has no accumulation of errors in a long time range.

According to a second aspect of the present invention, a driving direction sensor of a vehicle for outputting a compensated direction, comprises,
an earth magnetism sensor for detecting a forward angle relative to magnetic north of earth and outputting a first driving direction calculated from said detected forward angle,
a rate gyro sensor for calculating a rotated angle from detected rotating speed and for outputting a second driving direction obtained by adding said rotated angle to a reference direction, and
a direction compensating means for calculating a compensated direction from said first driving direction and said second driving direction,
wherein said direction compensating means calculates said compensated direction by a weighted mean process of said first driving direction and said second driving direction, and sets said compensated direction as said reference direction of said rate gyro sensor, characterised in that said driving direction sensor includes a sensor for sensing the temperature of said rate gyro sensor or of its environment, and in that the weighting factors of said weighted mean process are made to change according to the sensed temperature of said rate gyro sensor or its environment temperature such that the weighting factor is set to a first predetermined value near 1, the weighting factor continuously decreasing with increase of the said sensed temperature.

The distribution of the magnetic disturbance due to facilities and topographical factors is stable over a long time range. Therefore, if the navigation system reduces a contribution ratio of the output of the earth magnetism sensor in the high disturbance range, the accuracy of the obtained driving direction is improved.

The present invention will be more clearly understood from the description as set forth below with reference to the accompanying drawings, wherein:
Fig. 1 shows a fundamental construction of a direction sensor;
Fig. 2 shows a construction of a direction sensor ;
Fig. 3 shows a construction of a flux gate sensor used as the direction sensor;
Figs. 4A and 4B show a flow-chart of an operation of a microcomputer shown in Fig. 2;
Fig. 5 shows an example of a function of a weighted mean ratio which changes according to a driving time of a vehicle according to a first embodiment of the invention; and,
Fig. 6 shows another example of a function of a weighted mean ratio which changes according to a temperature according to a second embodiment of the invention.

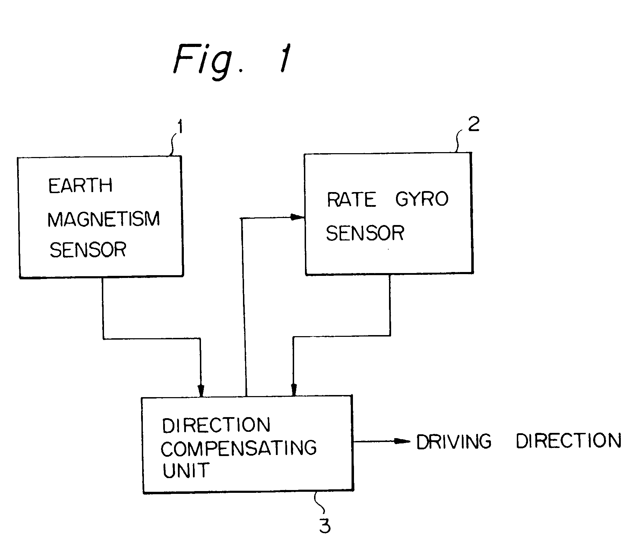

Figure 1 shows a fundamental construction of a driving direction sensor. As shown in Fig. 1, this driving sensor includes an earth magnetism sensor 1, a rate gyro sensor 2 and a direction compensating unit 3. The earth magnetism sensor 1 detects an angle of the driving direction relative to a magnetic north of earth magnetism and calculates the driving direction on a map. A flux gate sensor is a typical example of the earth magnetism sensor 1. The rate gyro sensor 2 detects a rotating speed of an object to which the rate gyro sensor 2 is attached, and calculates a rotated angle from the detected rotating speed, and then outputs a driving direction obtained by adding the rotated angle to a reference direction. The direction compensating unit 3 calculates a compensated driving direction by weighted mean process of the outputs from the earth magnetism sensor 1 and the rate gyro sensor 2 and sets the compensated direction as a reference direction of the rate gyro sensor 2.

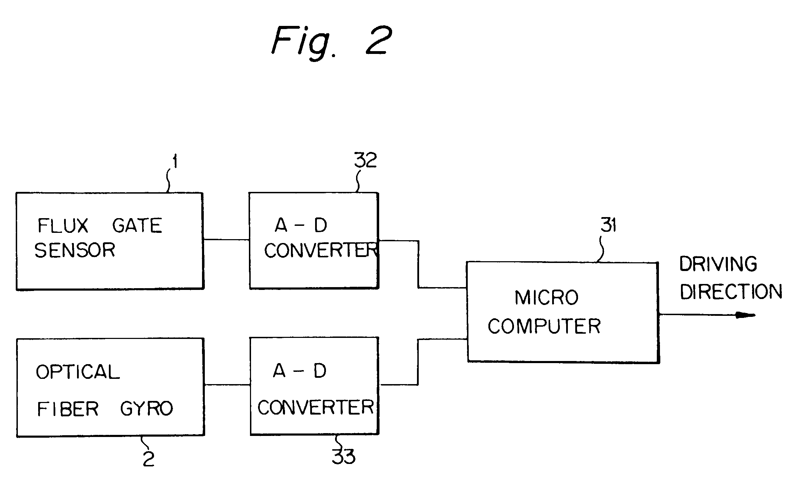

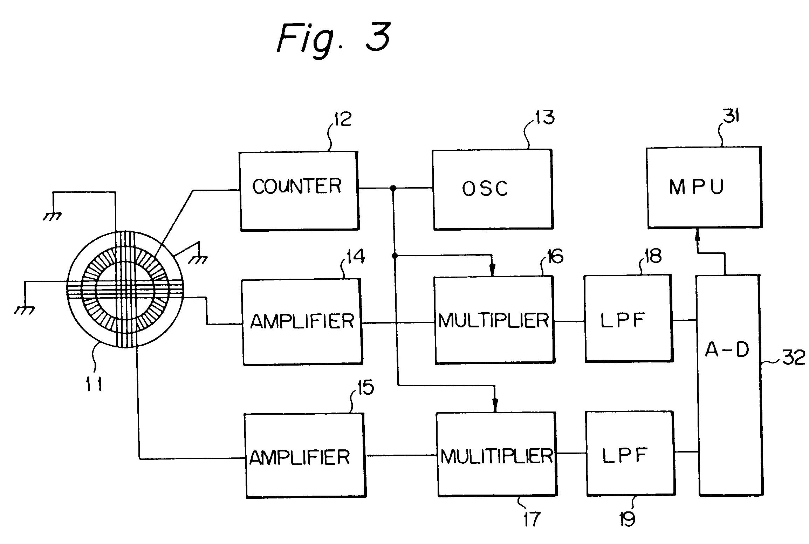

The above driving direction sensor is practically realized by using a microcomputer. Figure 2 shows a construction of the driving direction sensor, in which a flux gate sensor 1 corresponds to the earth magnetism sensor and an optical fiber gyro 2 corresponds to the rate gyro sensor. Figure 3 shows a detailed construction of the flux gate sensor 1. We abbreviated the detailed explanation of the construction shown in Fig. 3 because it is well known. The flux gate sensor outputs two voltage signals corresponding to X direction component and Y direction component of earth magnetism. The above X and Y directions are directions of the flux gate sensor 1, namely a forward direction of a vehicle and a perpendicular direction to the above direction.

In Fig. 2, the output of the flux gate sensor 1 is converted to digital signals by an analog-to-digital (A-D) converter 32. The microcomputer 31 periodically reads these output signals and calculates a first driving direction on a map from the output of the flux gate sensor 1 by compensating the difference between the map north and the earth magnetism north. Similarly, the optical fiber gyro 2 outputs a signal corresponding to the rotating angular speed and the output signal also converted to a digital signal by a A-D converter 33. The microcomputer 31 periodically reads this signal and calculates a rotated angle from a reference direction. This reference direction is stored in the microcomputer 31. The microcomputer 31 calculates a second driving direction by adding the rotated angle to the reference direction. The microcomputer 31 further calculates a compensated driving direction from the first and second driving directions and sets the compensated driving direction as the reference direction. Namely, the microcomputer 31 performs the calculating processes of the flux gate sensor 1 and the optical fiber gyro 2 in addition to the calculating process of the compensated driving direction. This detection process of the driving direction is performed at a predetermined period.

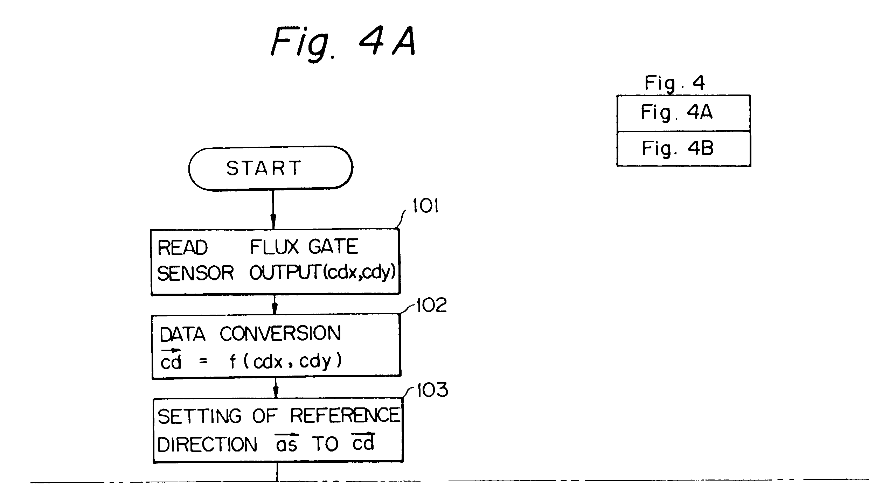

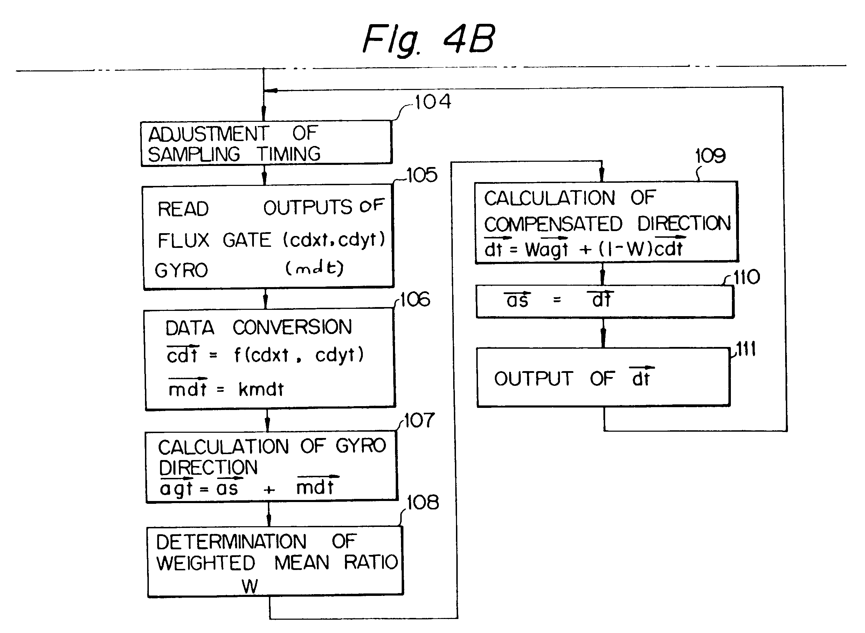

A flow-chart as shown in Figs. 4A and 4B shows the calculating operation of the microcomputer 31 for obtaining the compensated driving direction. At the beginning, the initialization of the optical fiber gyro 2 is performed by setting the reference direction → to the first driving direction. At step 101, the microcomputer 31 reads outputs (cdx, cdy) of the flux gate sensor 1 and converts these output data to a first driving direction $\vec{\text{cd}}$ at step 102. At step 103, the reference direction $\vec{\text{as}}$ is set to this $\vec{\text{cd}}$.

As described in the above, because detections of the compensated driving direction are performed at the predetermined sampling terms, the microcomputer performs a counting operation for adjusting the sampling timing at step 104. At step 105, the microcomputer 31 reads the outputs (cdxₜ , cdyₜ) of the flux gate sensor 1 and the output $\vec{\text{md}}$ₜ of the optical fiber gyro 2. These output data are respectively converted to the first driving direction $\vec{\text{cd}}$ₜ and the rotated angle $\vec{\text{md}}$ₜ at step 106. At step 107, the second driving direction $\vec{\text{ag}}$ₜ is calculated by adding the rotated angle $\vec{\text{md}}$ₜ to the reference angle $\vec{\text{as}}$.

At step 108, the weighted mean ratio W is determined. The determination process of this ratio W will be explained later. If this ratio is constant, this step 108 can be excluded. At step 109, the compensated driving direction $\vec{\text{d}}$ₜ is obtained by calculating the weighted mean of the first driving direction $\vec{\text{cd}}$ₜ and the second driving direction $\vec{\text{md}}$ₜ according to the following equation (1).${\vec{\text{d}}}_{\text{t}} \text{= (1 - W) ×} {\vec{\text{cd}}}_{\text{t}} \text{+ W ×} {\vec{\text{ag}}}_{\text{t}}$

The compensated driving direction $\vec{\text{d}}$ₜ is set to the reference direction as at step 110. The microcomputer 31 outputs this compensated driving direction to the navigation system at step 111. And then, the control returns to step 104, and repeats steps 104 through 111.

In the following, the error of the compensated driving direction $\vec{\text{d}}$ₜ in a short time range and a long time range is explained. As described in the above, an output of the earth magnetism sensor, such as a flux gate sensor 1, has a random error due to external disturbance. Now, suppose that the first driving direction $\vec{\text{cd}}$ₜ detected at a specific sampling timing has a direction error $\vec{\text{a}}$ₜ and the correct direction at that time is $\vec{\text{x}}$ₜ. The first driving direction $\vec{\text{cd}}$ₜ is expressed by a following equation (2).${\vec{\text{cd}}}_{\text{t}} \text{=} {\vec{\text{x}}}_{\text{t}} \text{+} {\vec{\text{a}}}_{\text{t}}$

The rate gyro sensor, such as an optical fiber sensor 2, detects a rotating speed and calculates a rotated angle from a reference angle. The detection error of the rotating speed changes due to factors such as temperature, however, it is nearly constant. This error is very small in a high precision rate gyro sensor such as the tyre included in this invention. The rotated angle is obtained by multiplying the rotating speed by the time duration. Therefore, the rotated angle has an error proportional to the error of the rotating speed. Now, it is supposed that the detection error of the rotated angle at a specific sample timing has a constant error $\vec{\text{g}}$ and the correct direction at that time is also $\vec{\text{x}}$ₜ. Because the conventional rate gyro sensor detects the rotated angle at a predetermined sampling cycle and calculates the direction by adding the rotated angle to the reference direction, and further sets the calculated direction to the reference direction, the detected direction $\vec{\text{ag}}$ₜ at t times is expressed by the following equation (3).${\vec{\text{ag}}}_{\text{t}} \text{=} {\vec{\text{x}}}_{\text{t}} \text{+ (t - 1) ×} \vec{\text{g}}$

As shown in the equation (3), the detection error of the rate gyro sensor accumulates with the sample number. In the following description, the first reference direction is supposed to be set in the correct direction.

The first driving direction $\vec{\text{cd}}$₁ and the second driving direction detected $\vec{\text{ag}}$₁ at the first sampling time are respectively expressed by following equations (4) and (5).${\vec{\text{cd}}}_{\text{1}} \text{=} {\vec{\text{x}}}_{\text{1}} \text{+} {\vec{\text{a}}}_{\text{1}}$${\vec{\text{ag}}}_{\text{1}} \text{=} {\vec{\text{x}}}_{\text{1}} \text{+} \vec{\text{g}}$

The compensated driving direction d₁ obtained by weighted mean with a ratio W expressed by the following equation (6).${\vec{\text{d}}}_{\text{1}} \text{= (1 - W) × (} {\vec{\text{x}}}_{\text{1}} \text{+} {\vec{\text{a}}}_{\text{1}} \text{) + W × (} {\vec{\text{x}}}_{\text{1}} \text{+} \vec{\text{g}} \text{)} \text{=} {\vec{\text{x}}}_{\text{1}} \text{+ (1 - W) ×} {\vec{\text{a}}}_{\text{1}} \text{+ W ×} \vec{\text{g}}$

Consequently, the compensated driving direction obtained at the first sampling has an error $\vec{\text{e}}$₁ expressed by the following equation (7).${\vec{\text{e}}}_{\text{1}} \text{= (1 - W) ×} {\vec{\text{a}}}_{\text{1}} \text{+ W ×} \vec{\text{g}}$

When the ratio W is 0.9, the influence of the external magnetic disturbance is reduced to 1/10. And at that time, the error $\vec{\text{g}}$ of the rate gyro becomes only 9/0. However, because the error $\vec{\text{g}}$ is very small, the error $\vec{\text{g}}$ does not influence the compensated driving direction. If the ratio W is nearer to 1, the influence of the magnetic disturbance is smaller. In practice, the ratio W is 1/100 through 1/5000 for 0.5 second sampling term. Therefore, although the detection error a₁ due to the intensity of the magnetic disturbance is large, the error of the compensated driving direction is not large.

After setting the above compensated driving direction $\vec{\text{d}}$₁ as the reference direction, the second sampling is performed after the predetermined term. The driving directions obtained at the second sampling process are expressed by the following equations (8) and (9).${\vec{\text{cd}}}_{\text{2}} \text{=} {\vec{\text{x}}}_{\text{2}} \text{+} {\vec{\text{a}}}_{\text{2}}$${\vec{\text{ag}}}_{\text{2}} \text{=} {\vec{\text{x}}}_{\text{2}} \text{+ (1 - W) ×} {\vec{\text{a}}}_{\text{2}} \text{+ W ×} \vec{\text{g}} \text{+} \vec{\text{g}}$

The second compensated driving direction $\vec{\text{d}}$₂ obtained from above $\vec{\text{cd}}$₂ and $\vec{\text{ag}}$₂ is expressed by the following equation (10).${\vec{\text{d}}}_{\text{2}} \text{=} {\vec{\text{x}}}_{\text{2}} \text{+ W×(W + 1)×9 + (1 - W)×(W×} {\vec{\text{a}}}_{\text{1}} \text{+} {\vec{\text{a}}}_{\text{2}} \text{)}$

After repeating these process for k times, the obtained compensated driving direction $\vec{\text{d}}$ₖ is expressed by the following equation (11).${\vec{\text{d}}}_{\text{k}} \text{= -} {\vec{\text{x}}}_{\text{k}} {\text{+ W×(W}}^{\text{k-1}} {\text{+ W}}^{\text{k-2}} \text{+ ... + 1)×} \vec{\text{g}} {\text{+ (1 - W)×(W}}^{\text{k-1}} \text{×} {\vec{\text{a}}}_{\text{1}} {\text{+ W}}^{\text{k-2}} \text{×} {\vec{\text{a}}}_{\text{2}} \text{- + ... +} {\vec{\text{a}}}_{\text{k}} \text{)} \text{=} {\vec{\text{X}}}_{\text{k}} {\text{+ W×(W}}^{\text{k}} \text{- 1)/(W - 1)×} \vec{\text{g}} {\text{+ (1 - W)(W}}^{\text{k-1}} \text{×} {\vec{\text{a}}}_{\text{1}} \text{+ ... +} {\vec{\text{a}}}_{\text{k}} \text{)}$

Because W is less than 1, the second term of the equation (11) becomes negligible when the sampling times k becomes very large. Consequently, the equation (11) is the following equation (12).${\text{dk}}_{\text{k}} \text{=} {\vec{\text{x}}}_{\text{k}} \text{+ W/(1 - W)×} \vec{\text{g}} {\text{+ (1 - W)(W}}^{\text{k-1}} {\vec{\text{a}}}_{\text{1}} \text{+ ... +} {\vec{\text{a}}}_{\text{k}} \text{)}$

Further, the errors of the earth magnetism sensor due to the external magnetic disturbance is disposed to be zero by averaging sampling values for a long time, therefore, the third term of the equation (12) is negligible. Then, the equation (12) is the following equation (13).${\vec{\text{d}}}_{\text{k}} \text{=} {\vec{\text{x}}}_{\text{k}} \text{+ W/(1 - W)×} \vec{\text{g}}$

When the ratio W is 0.9, the equation (13) shows that the error of the compensated driving direction is 9 * $\vec{\text{g}}$. As described already, the error $\vec{\text{g}}$ is very small, therefore, this error is not the problem. If the ratio W becomes nearer to 1, the error of the compensated driving direction $\vec{\text{d}}$ₖ becomes larger and is not negligible. Therefore, the ratio W needs to be determined by considering the error of the rate gyro.

As described in the above, the driving direction sensor maintains accuracy in a long time range and also is accurate in a short time range because the compensation process by the first driving direction of the earth magnetism sensor having sudden errors is not performed.

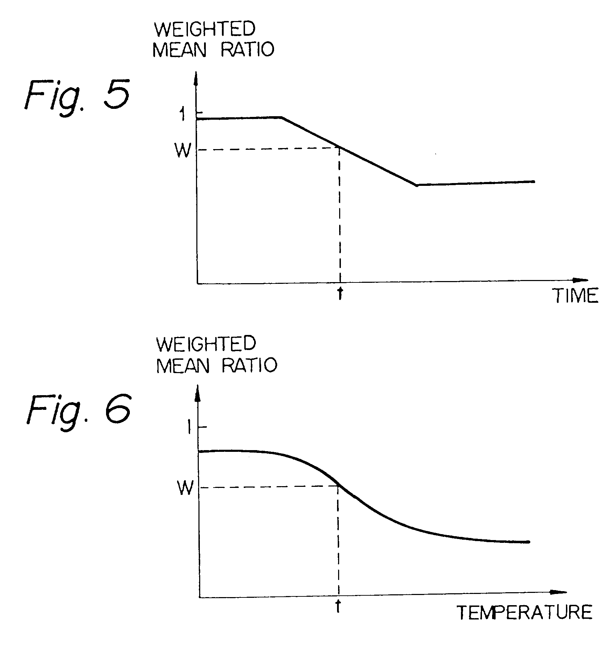

In the above example, the weighted mean ratio W is constant. However, the detection accuracy of the direction sensor can be improved by changing the ratio W according to specific functions. Figure 5 shows an example of the function in which the ratio W changes according to the operation time of the direction sensor from the start initialization in accordance with a first embodiment of the invention. As described in the above, since the rate gyro sensor has a high detection accuracy in a short time range, the rate gyro sensor influences more the compensated direction by setting the ratio W near to 1 and the influence of the error of the earth magnetism sensor can be reduced. Then, when the errors of the rate gyro sensor accumulate after a long operation time, the averaged errors of the earth magnetism sensor, namely, the absolute direction greatly influences the compensated direction by decreasing the ratio W.

The detection error of the rate gyro sensor generally changes according to the temperature of the sensor. Figure 6 shows another example of the function in which the ratio W changes according to the temperature of the rate gyro sensor or the environmental temperature in accordance with a second embodiment of the invention. In order to realize this embodiment, the construction of the direction sensor as shown in Fig. 2 includes a temperature sensor. As the detection error of the rate gyro sensor generally increases according to the increase in temperature, the ratio W is nearer to 1 and the rate gyro sensor contributes to the compensated direction when the temperature is low.

## Claims

1. A driving direction sensor of a vehicle for outputting a compensated direction, comprising:
an earth magnetism sensor (1) for detecting a forward angle relative to magnetic north of earth and outputting a first driving direction calculated from said detected forward angle,
a rate gyro sensor (2) for calculating a rotated angle from detected rotating speed and for outputting a second driving direction obtained by adding said rotated angle to a reference direction, and
a direction compensating means (3) for calculating a compensated direction from said first driving direction and said second driving direction,
wherein said direction compensating means (3) calculates said compensated direction by a weighted mean process of said first driving direction and said second driving direction, and sets said compensated direction as said reference direction of said rate gyro sensor, characterised in that the weighting factors of said weighted mean process are made to change according to a driving time of said vehicle such that the weighting factor of the rate gyro sensor is initially set to a first predetermined value near 1, the weighting factor continuously decreases from the first predetermined value to a second predetermined value in proportion to time after a first predetermined period of time, and the weighting factor is held at the second predetermined value after a second predetermined period of time.

2. A driving direction sensor of a vehicle for outputting a compensated direction, comprising:
an earth magnetism sensor (1) for detecting a forward angle relative to magnetic north of earth and outputting a first driving direction calculated from said detected forward angle,
a rate gyro sensor (2) for calculating a rotated angle from detected rotating speed and for outputting a second driving direction obtained by adding said rotated angle to a reference direction, and
a direction compensating means (3) for calculating a compensated direction from said first driving direction and said second driving direction,
wherein said direction compensating means (3) calculates said compensated direction by a weighted mean process of said first driving direction and said second driving direction, and sets said compensated direction as said reference direction of said rate gyro sensor, characterised in that said driving direction sensor includes a sensor for sensing the temperature of said rate gyro sensor or of its environment, and in that the weighting factors of said weighted mean process are made to change according to the sensed temperature of said rate gyro sensor (2) or its environment temperature such that the weighting factor is set to a first predetermined value near 1, the weighting factor continuously decreasing with increase of the said sensed temperature.

## Patentansprüche

1. Fahrtrichtungssensor eines Fahrzeuges zur Ausgabe einer kompensierten Richtung, umfassend:
einen Erdmagnetismussensor zur Erfassung eines Vorwärtswinkels relativ zum magnetischen Nordpol der Erde und zur Ausgabe einer aus dem erfaßten Vorwärtswinkel berechneten ersten Fahrtrichtung,
einen Drehgeschwindigkeitskreiselsensor zur Berechnung eines Drehwinkels aus der erfaßten Drehgeschwindigkeit und zur Ausgabe einer zweiten Fahrtrichtung, welche erhalten wird durch Addieren des Drehwinkels zu einer Referenzrichtung, und
eine Richtungskompensationsvorrichtung zur Berechnung einer kompensierten Richtung aus der ersten Fahrtrichtung und der zweiten Fahrtrichtung,
worin die Richtungskompensationsvorrichtung die kompensierte Richtung durch einen gewichteten Mittlungsprozeß der ersten Fahrtrichtung und der zweiten Fahrtrichtung berechnet, und die kompensierte Richtung als Referenzrichtung des Drehgeschwindigkeitskreiselsensors einstellt, dadurch **gekennzeichnet,** daß die Gewichtungsfaktoren des gewichteten Mittlungsprozesses verändert werden gemäß einer Fahrtzeit des Fahrzeuges, auf solche Weise, daß der Wichtungsfaktor des Drehgeschwindigkeitskreiselsensors anfänglich auf einen ersten vorbestimmten Wert in der Nähe von 1 gesetzt ist, der Wichtungsfaktor kontinuierlich abnimmt von dem ersten vorbestimmten Wert auf einen zweiten vorbestimmten Wert proportional zur Zeit nach einer ersten vorbestimmten Zeitspanne, und der Gewichtsfaktor auf dem zweiten vorbestimmten Wert gehalten wird nach einer zweiten vorbestimmten Zeitspanne.

2. Fahrtrichtungssensor eines Fahrzeugs, zur Ausgabe einer kompensierten Richtung, umfassend:
einen Erdmagnetismussensor zur Erfassung eines Vorwärtswinkels relativ zum magnetischen Nordpol der Erde und zur Ausgabe einer aus dem erfaßten Vorwärtswinkel berechneten ersten Fahrtrichtung,
einen Drehgeschwindigkeitskreiselsensor zur Berechnung eines Drehwinkels aus der erfaßten Drehgeschwindigkeit und zur Ausgabe einer zweiten Fahrtrichtung, welche erhalten wird durch Addieren des Drehwinkels zu einer Referenzrichtung, und
eine Richtungskompensationsvorrichtung zur Berechnung einer kompensierten Richtung aus der ersten Fahrtrichtung und der zweiten Fahrtrichtung,
worin die Richtungskompensationsvorrichtung die kompensierte Richtung durch einen gewichteten Mittlungsprozeß der ersten Fahrtrichtung und der zweiten Fahrtrichtung berechnet, und die kompensierte Richtung als Referenzrichtung des Drehgeschwindigkeitskreiselsensors einstellt, dadurch **gekennzeichnet,** daß der Fahrtrichtungssensor einen Sensor enthält zur Abtastung der Temperatur des Drehgeschwindigkeitskreiselsensors oder seiner Umgebung, und dadurch, daß die Gewichtsfaktoren des gewichteten Mittlungsprozesses verändert werden gemäß der abgetasteten Temperatur des Drehgeschwindigkeitskreiselsensors oder seiner Umgebungstemperatur auf solche Weise, daß der Gewichtsfaktor auf einen ersten vorbestimmten Wert in der Nähe von 1 eingestellt wird, wobei der Gewichtungsfaktor kontinuierlich abnimmt mit der Erhöhung der abgetasteten Temperatur.

## Revendications

1. Capteur de direction de course d'un véhicule destiné à fournir les données d'une direction compensée, comprenant :
un capteur du magnétisme terrestre (1) destiné à détecter un angle vers l'avant par rapport au nord magnétique terrestre, et à fournir les données d'une première direction de course calculée à partir dudit angle vers l'avant détecté,
un capteur gyroscopique (2) destiné à calculer un angle de rotation à partir de la vitesse de rotation détectée et destiné à fournir les données d'une seconde direction de course obtenue en additionnant ledit angle de rotation à une direction de référence, et
un moyen de compensation de la direction (3) destiné à calculer une direction compensée à partir de ladite première direction de course et ladite seconde direction de course,
dans lequel ledit moyen de compensation de la direction (3) calcule ladite direction compensée par un procédé de moyenne pondérée de ladite première direction de course et de ladite seconde direction de course, et fixe ladite direction compensée comme dite direction de référence dudit capteur gyroscopique, caractérisé en ce que les facteurs de pondération dudit procédé de moyenne pondérée doivent changer selon la durée de la course dudit véhicule, de façon que le facteur de pondération du capteur gyroscopique soit initialement fixé sur une première valeur prédéterminée proche de 1, que le facteur de pondération décroisse en continu à partir de la première valeur prédéterminée pour atteindre une seconde valeur prédéterminée en proportion de la durée écoulée depuis la première période de temps prédéterminée, et que le facteur de pondération soit maintenu à la seconde valeur prédéterminée après une seconde période de temps prédéterminée.

2. Capteur de direction de course d'un véhicule destiné à fournir les données d'une direction compensée, comprenant :
un capteur de magnétisme terrestre (1) destiné à détecter un angle vers l'avant par rapport au nord magnétique terrestre et à fournir les données d'une première direction de course calculée à partir dudit angle vers l'avant détecté,
un capteur gyroscopique (2) destiné à calculer un angle de rotation à partir de la vitesse de rotation détectée et destiné à fournir les données d'une seconde direction de course obtenue en additionnant ledit angle de rotation à une direction de référence, et
un moyen de compensation de la direction (3) destiné à calculer une direction compensée à partir de ladite première direction de course et de ladite seconde direction de course,
dans lequel ledit moyen de compensation de la direction (3) calcule ladite direction compensée par un procédé de moyenne pondérée de ladite première direction de course et de ladite seconde direction de course, et fixe ladite direction compensée comme dite direction de référence dudit capteur gyroscopique, caractérisé en ce que ledit capteur de direction de course est composé d'un capteur destiné à capter la température dudit capteur gyroscopique ou de son environnement, et en ce que les facteurs de pondération dudit procédé de moyenne pondérée doivent changer selon la température captée dudit capteur gyroscopique (2) ou la température de son environnement de façon que le facteur de pondération soit réglé sur une première valeur prédéterminée proche de 1, le facteur de pondération décroissant, de manière continue, avec l'augmentation de ladite température captée.
